# FASCICULE DE BREVET EUROPEEN

(11) **EP 0 527 931 B1**
(45) Date de publication et mention de la délivrance du brevet: **13.04.1994**
(21) Numéro de dépôt: 91910322.6
(22) Date de dépôt: 07.05.1991
(51) Int. Cl.: B64D 1/22, H02G 1/04

(54) **SYSTEME D'AIDE AU PILOTAGE D'UN HELICOPTERE PORTANT UNE CHARGE, NOTAMMENT EN VOL STATIONNAIRE**
HILFSYSTEM ZUM STEUERN EINES MIT EINER AUFGEHÄNGTEN LAST ANGEORDNETEN HUBSCHRAUBERS, INSBESONDERE WÄHREND DES SCHWEBEFLUGES
AID SYSTEM FOR PILOTING A HELICOPTER CARRYING A LOAD, PARTICULARLY IN HOVER FLIGHT

(30) Priorité: 10.05.1990 FR 9005812
(43) Date de publication de la demande: 24.02.1993
(73) Titulaire: ELECTRICITE DE FRANCE Service National, 75008 Paris (FR)
(72) Inventeur: DE PARNY, Robert Les Rouvières, F-13950 Cadolive (FR); BERENGUIER, Paul, F-74000 Annecy (FR); SORNETTE, Christian, F-83050 Draguignan (FR)
(74) Mandataire: Ilgart, Jean-Christophe
(86) Numéro de dépôt international: FR9100382
(87) Numéro de publication internationale: WO9117084

(56) Documents cités:
- EP-A- 0 031 855
- DE-A- 2 850 893
- FR-A- 2 502 772
- US-A- 2 873 075
- US-A- 3 904 156
- US-A- 4 673 059

## Description

L'invention concerne un système d'aide au pilotage d'un hélicoptère portant une charge accrochée sur l'appareil par un système d'élingues, notamment en vol stationnaire.

Un exemple particulier où l'invention peut favorablement trouver emploi concerne les interventions sur des câbles électriques aériens. Une nacelle est suspendue à l'hélicoptère et porte les agents chargés de l'intervention. La portion du câble sur laquelle on travaille est liée à la nacelle par l'intermédiaire de griffes. L'hélicoptère est toutefois soumis à des dérives qu'il faut incessamment corriger, ce qui est très fatigant pour le pilote en raison notamment de l'absence de repères précis qui pourraient faciliter les ajustements de position de l'hélicoptère.

L'objet de l'invention concerne un système qui permet de fournir très simplement des repères fiables pour l'ajustement de la position de l'hélicoptère. Les informations sont fournies sous une forme qui permet leur exploitation facile, éventuellement même par un système de pilotage automatique.

Le brevet FR-A-2 502 772 décrit un système pour maintenir un hélicoptère en vol stationnaire grâce à un poids suspendu par un câble et qui est à demi décollé du sol. L'asservissement de la position nécessite une mesure du couple de basculement du levier sur lequel le câble est tendu. Or ce couple dépend de l'inclinaison du câble, de sorte que le système est peu précis et difficile à employer correctement.

Le brevet US-A-3 904 156 décrit un agencement pour stabiliser dynamiquement une charge suspendue à un hélicoptère en mouvement. Des capteurs permettent de mesurer les angles entre l'hélicoptère, les bras de suspension et les câbles de suspension.

Aucun de ces brevets ne décrit de moyen de mesure de tension d'une structure de suspension.

Le système d'aide au pilotage de l'invention comprend une structure rigide accrochée à un point de support de l'hélicoptère et se caractérise en ce que des détecteurs d'inclinaison et un dispositif de mesure de tension sont montés sur la structure rigide à laquelle la charge est suspendue, et en ce que des appareils de Lecture de l'inclinaison et de la tension axiale de la structure rigide se trouvent à bord de l'hélicoptère.

On va maintenant décrire l'invention à l'aide des figures suivantes annexées à titre illustratif et non limitatif :
- la figure 1 est une vue d'ensemble d'un appareillage qui comprend l'invention ;
- la figure 1A représente plus en détail le système de mesure et de lecture des informations d'aide au pilotage ;
- la figure 2 représente plus précisément l'invention ;
- la figure 3 représente une autre possibilité d'utiLisation de L'invention ; et
- la figure 4 représente une troisième possibilité d'utilisation de l'invention.

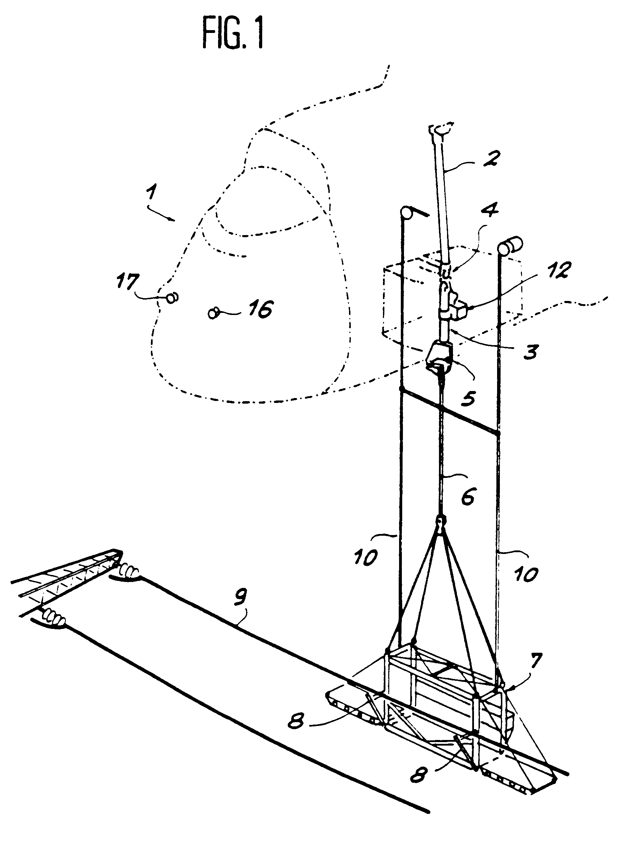

Sur la figure 1, l'hélicoptère est référencé par 1 ; il est équipé d'une perche supérieure 2 rigide qui s'étend dans l'habitacle et en traverse le plancher par son extrémité inférieure. La perche supérieure 2 est accrochée à un point de support 27 de l'hélicoptère 1 par un axe de suspension 26.

Une bielle 3 est suspendue par un joint de cardan 4 (ou tout système fonctionnant comme une rotule) à l'extrémité inférieure de la perche supérieure 2, et son extrémité inférieure porte un crochet 5 sur lequel est enfilée l'extrémité d'une élingue 6 qui soutient une nacelle 7 munie d'une paire de griffes 8 destinées à l'immobilisation d'un câble électrique aérien 9 sur lequel on veut procéder à une intervention. Une paire de câbles latéraux 10 assurent la stabilisation de la nacelle 7 en la reliant directement à l'hélicoptère 1.

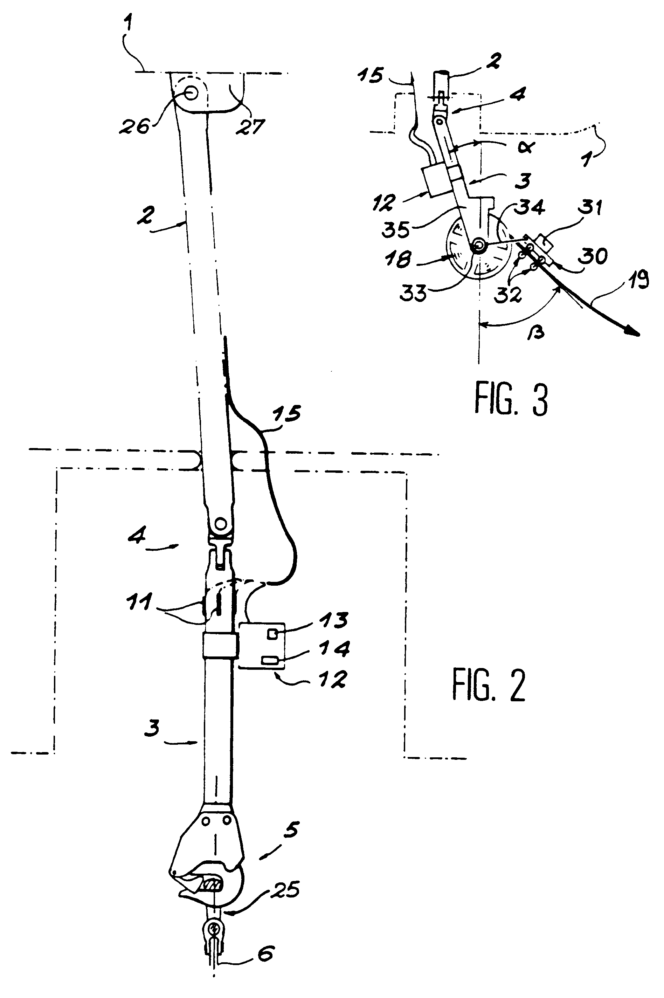

La bielle 3 et les éléments voisins ont été représentés plus en détail sur la figure 2, notamment un anneau de centrage 25 assurant l'alignement de la bielle 3 avec l'élingue 6 et porté par le crochet 5. Des jauges 11 d'extensométrie ont été collées sur la bielle 3 dans une direction qui leur permet de mesurer la tension axiale de la bielle 3, c'est-à-dire son élongation. Elles peuvent être au nombre de quatre, regulièrement réparties sur une circonférence afin d'annuler les erreurs qui pourraient être produites par des flexions de la bielle 3.

Un boîtier de support 12 est accroché à la bielle 3 à proximité des jauges 11. IL contient des détecteurs d'inclinaison 13 et 14 qui sont de préférence au nombre de deux au moins et qui mesurent l'inclinaison de la bielle 3 suivant deux projections différentes, notamment suivant les plans verticaux longitudinal et transversal par rapport à l'habitacle de l'hélicoptère 1.

Un câble électrique 15 transporte Les informations obtenues des jauges 11 et des détecteurs d'inclinaison 13 et 14 à l'intérieur de L'hélicoptère 1 et plus précisément vers un boîtier de conditionnement où, en particulier, la moyenne des informations des jauges 11 est faite, puis vers un cadran détecteur d'effort 16 et à un cadran à aiguilles croisées 17 qui indiquent respectivement la tension de la bielle 3 et son inclinaison par rapport à la verticale apparente. La verticale apparente correspond à la direction que prendrait un fil à plomb suspendu à L'hélicoptère. Elle est confondue avec la verticale réelle en vol stationnaire.

La figure 1A représente plus en détail le système de mesure. Chacune des aiguilles croisées est sensible au signal de sortie d'un des inclinomètres 13 ou 14 et déplacée perpendiculairement à sa longueur. Un tel cadran à aiguilles croisées 17 est déjà utilisé dans le système VOR/ILS de navigation aérienne.

Le pilote peut donc exécuter immédiatement et facilement les mouvements verticaux et horizontaux qui permettent de revenir à la position idéale de l'hélicoptère 1, en principe une position juste au-dessus de la nacelle 7 et dans laquelle le câble 9 est soulevé sans être excessivement tendu. La tension de La bielle 3 correspondant à cette situation idéale doit être fournie par un étalonnage.

Divers aménagements peuvent être apportés à cette réalisation. La bielle 3 peut d'abord être remplacée par une structure quelconque à condition d'être rigide ; les détecteurs d'inclinaison 13 et 14 et les jauges 11 peuvent être situés ailleurs, par exemple sur le crochet 5 ou près de lui.

Les détecteurs d'inclinaison 13 et 14 peuvent être doublés afin de réduire les erreurs et détecter les pannes éventuelles. Dans l'hypothèse où l'inclinaison de la bielle 3 dans un seul plan est intéressante, on peut au contraire n'en prévoir qu'un seul.

Il est encore envisageable d'envoyer les signaux d'écart directement sur un système de pilotage automatique de l'hélicoptère, ce qui permet de rendre automatique le vol stationnaire.

La bielle 3 et le crochet 5 sont uniques afin d'offrir des conditions de sécurité satisfaisantes. On peut en effet rencontrer des situations où la nacelle 7 doit être larguée. Elle est alors détachée de l'hélicoptère 1 et suspendue au câble électrique aérien 9. La présence de plusieurs crochets 5 multiplie les risques que l'un d'eux ne s'ouvre pas, et si les crochets 5 s'ouvrent à des instants différents, l'hélicoptère 1 est soumis à des comportements aberrants dans l'état transitoire entre le début et la fin de l'ouverture des crochets 5, du moins si les signaux sont envoyés au système de pilotage automatique. Il en irait de même si un crochet 5 s'ouvrait par accident. Dans toutes ces hypothèses, l'hélicoptère 1 serait déséquilibré par le déplacement brusque de son centre de gravité.

La figure 3 illustre un autre emploi de l'invention. Il s'agit maintenant de dérouler un câble 19 afin de constituer une portée de câble entre deux pylônes électriques. Pour cela, l'hélicoptère 1 se déplace (vers la gauche sur la figure) et l'extrémité inférieure de la bielle 3 ou d'une élingue porte une bobine dérouleuse 18 munie d'un frein commandé de l'hélicoptère 1 de manière à ajuster la tension sur le câble en déroulement. Ce frein peut être un moteur hydraulique disposé entre la chape 35 porteuse de la bobine 18 et l'axe 33 de cette dernière, afin de commander la vitesse de rotation de l'axe 33.

On désire effectuer le déroulement avec une force horizontale constante s'exerçant sur la bielle 3 et la bobine dérouleuse 18, ce qui permet de régler avec précision la flèche des portées de câble entre pylônes. Il suffit pour cela de faire le produit de la tension de la bielle 3 et du sinus de l'angle α qui représente l'inclinaison de la bielle 3 sur la verticale à l'aide des jauges 11 et des détecteurs d'inclinaison 13 et 14. Le frein est alors commandé de manière à retrouver la tension horizontale souhaitée.

On peut encore vouloir connaître la tension du câble 19 : on incorpore alors au dispositif un système tel qu'un levier 30, portant un détecteur d'inclinaison supplémentaire 31 et, à ses extrémités, deux paires de galets 32 entre lesquels glisse le câble 19. Le levier est lié de manière souple à la bobine dérouleuse 18 de manière à rester sur la portion du câble 19 qui vient juste d'être déroulée. Il peut être relié à L'axe 33 de la bobine 18 par une bielle 34, des fils ou n'importe quel autre moyen. Le Levier 30 reste parallèle au câble 19. On pourra alors en déduire l'angle β correspondant à l'inclinaison sur la verticale de cette portion du câble 19, et en déduire la tension du câble 19 par la division de la force horizontale précédemment calculée par sin β.

D'autres moyens possibles de calcul de la tention du câble 19 consistent en des capteurs piézo-électriques ou des jauges de contraintes sur l'axe 33. La charge exercée par le câble 19 sur cet axe 33 est en effet représentative de la tension.

Ces moyens permettent donc d'asservir le vol de l'hélicoptère 1 pour obtenir des conditions uniformes de tension du câble 19.

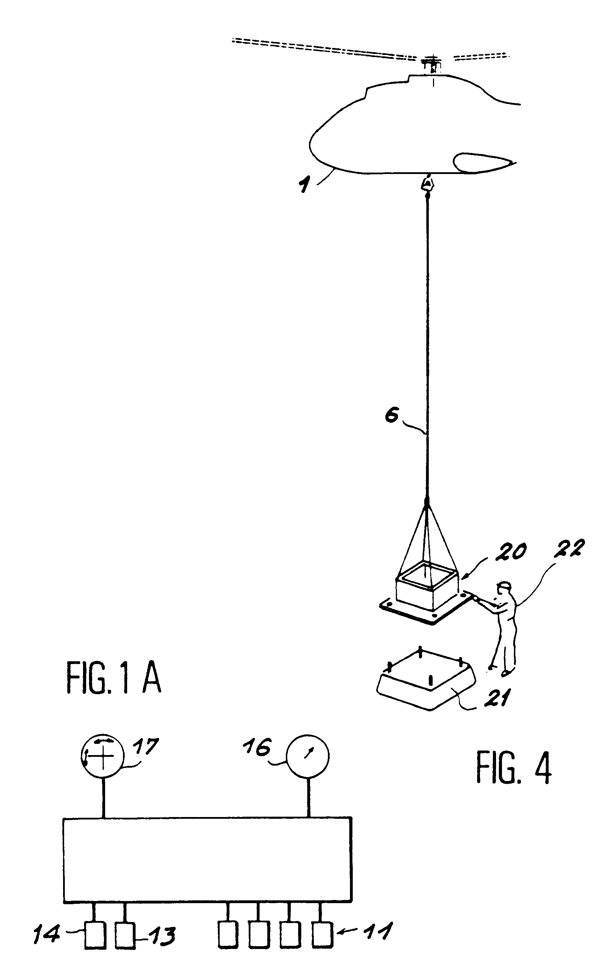

La figure 4 représente une application supplémentaire de l'invention. Le dispositif est semblable à celui de la figure 1 sauf que la charge suspendue n'est plus la nacelle 7 mais une charge 20 que l'hélicoptère doit positionner avec précision. Il peut s'agir d'une grosse pièce mécanique à visser sur un support 21. Le procédé peut être décomposé en une phase d'approche de la charge 20 pendant laquelle l'invention n'est pas utilisée, une phase de positionnement plus précis où l'hélicoptère 1 est en vol stationnaire et où on attend que les oscillations de la charge 20 s'amortissent en suivant notamment les indications du cadran à aiguilles croisées 17, et une phase d'ajustement de positionnement où un opérateur au sol 22 intervient en déplaçant la charge 20, ce qui se traduit par des efforts et des déplacements de la bielle 3 et impose à l'hélicoptère 1 des mouvements de suivi qui amènent la charge 20 à l'endroit souhaité.

## Revendications

1. Système d'aide au pilotage d'un hélicoptère (1) portant une charge (7, 20), comprenant une structure rigide (3) accrochée à un point du support de l'hélicoptère, caractérisé en ce que des détecteurs d'inclinaison (13, 14) et un dispositif de mesure de tension (11) sont montés sur la structure rigide, à laquelle la charge est suspendue, et en ce que des appareils de lecture (16, 17) de l'inclinaison et de la tension axiale de la structure rigide se trouvent à bord de l'hélicoptère (1).

2. Système selon la revendication 1, caractérisé en ce que la structure rigide est une barre.

3. Système selon la revendication 1 ou 2, caractérisé en ce que les détecteurs d'inclinaison sont au nombre de deux et mesurent l'inclinaison dans deux plans perpendiculaires.

4. Système selon l'une quelconque des revendications 1 à 3, caractérisé en ce que la structure rigide est munie à son extrémité inférieure d'un crochet (5) de suspension de la charge.

5. Système selon l'une quelconque des revendications 1 à 4, caractérisé en ce que la structure rigide est reliée par son extrémité supérieure à l'hélicoptère par un système à rotule (4).

6. Système selon la revendication 4, caractérisé en ce que le crochet (5) porte un anneau de centrage (25).

## Patentansprüche

1. Steuerungshilfssystem eines Hubschraubers (1), der eine Last (7, 20) trägt, die eine steife Struktur (3) umfaßt, die aufgehängt ist an einem Trägerpunkt des Hubschraubers, dadurch gekennzeichnet, daß Neigungsmesser (13, 14) und eine Spannungsmeßeinrichtung (11) an der steifen Stuktur angebracht sind, an der die Last aufgehängt ist, und dadurch, daß Lesegeräte (16, 17) der Neigung und der Axialspannung der steifen Struktur sich an Bord des Hubschraubers (1) befinden.

2. System nach Anspruch 1, dadurch gekennzeichnet, daß die steife Struktur eine Stange ist.

3. System nach Anspruch 1 oder 2, dadurch gekennzeichnet, daß zwei Neigungsmesser vorhanden sind und die Neigung in zwei senkrechten Ebenen messen.

4. System nach einem der Ansprüche 1 bis 3, dadurch gekennzeichnet, daß die steife Struktur an ihrem unteren Ende versehen ist mit einem Haken (5) zum Aufhängen der Last.

5. System nach einem der Ansprüche 1 bis 4, dadurch gekennzeichnet, daß die steife Struktur durch ihr oberes Ende mit dem Hubschrauber verbunden ist mittels eines Kugelgelenktsystems (4).

6. System nach Anspruch 4, dadurch gekennzeichnet, daß der Hacken (5) einen Zentrierungsring (25) trägt.

## Claims

1. System for aiding the piloting of a helicopter (1) carrying a load (7,20), comprising a rigid structure (3) attached to a support point of the helicopter, characterized in that inclination detectors (13,14) and a tension measuring device (11) are mounted on the rigid structure on which the load is suspended and in that instruments (16,17) for reading the inclination and axial tension of the rigid structure are located on board the helicopter (1).

2. System according to claim 1, characterized in that the rigid structure is a bar.

3. System according to claims 1 or 2, characterized in that there are two inclinometers and they measure the inclination in two perpendicular planes.

4. System according to any one of the claims 1 to 3, characterized in that the rigid structure is provided at its lower end with a load suspension hook (5).

5. System according to any one of the claims 1 to 4, characterized in that the rigid structure is connected by its upper end to the helicopter using a ball joint system (4).

6. System according to claim 4, characterized in that the hook (5) carries a centring ring (25).
